# EUROPEAN PATENT APPLICATION

(11) **EP 4 485 029 A1**
(43) Date of publication of application: **01.01.2025**
(21) Application number: 24166841.7
(22) Date of filing: 27.03.2024
(51) Int. Cl.: G02B 6/44

(54) **OPTICAL FIBER RIBBON WITH SELECTIVE SUPERABSORBENT COATING**

(30) Priority: 27.06.2023 IN 202311043077
(71) Applicant: HFCL Limited, New Delhi 110048 (IN)
(72) Inventor: Kumar, Atul, 501359 Telangana (IN); Agrawal, Pramod, 501359 Telangana (IN); Weimann, Peter, Georgia, 30306 (US); Agrawal, Sarthak, 501359 Telangana (IN)
(74) Representative: Office Freylinger

(57) **Abstract**

The present invention provides an optical fiber ribbon (10) comprising a plurality of optical fibers (11) with coating of superabsorbent material (C). The coating (C) is applied selectively on bonded regions (13) or unbonded regions (14) of the ribbon (10). The ribbon (10) provides for reduced diameter, higher packing density, and reduced microbending losses. Optical fiber cable (20) comprising optical fiber ribbon (10) is also provided in the present invention.

## Description

### FIELD OF THE INVENTION

The present invention relates to the field of optical fiber cables. In particular, the present invention relates to optical fiber ribbon cables having provisions for water resistance.

### BACKGROUND OF THE INVENTION

In typical fiber optic cables, optical fiber ribbons are a convenient solution when high fiber density within a small space is required. Intermittently Bonded Ribbon (IBR) cables usually include a high count of optical fibers that pack more number of optical fibers in a given diameter. During such packing, maintaining the desired characteristics as per standards is a challenging task. As optical fibers are very sensitive to the water penetration, a primary problem that arises during packing is providing sufficient water resistance. Multiple mechanisms such as water blocking yarn, tapes, water blocking jelly, etc. have been conventionally used to address the problem. In order to safeguard the fibers in IBR cables against water penetration, higher amount of water swellable materials such as yarns, tapes, etc. are required, thereby contributing to manufacturing complexity, manufacturing costs and concurrent increase in cable diameter.

As a partial solution to address the above problem, water swellable coating have been proposed in the art. These coatings are applied on IBRs to prevent ingression of water. However, when in contact with water, the water swellable material swells and exerts pressure on the fiber that contributes to micro bending losses. While such losses could be nominal in cables with low fiber count, in high density cables (e.g., a typical cable enclosing few thousands fibers) such as in typical IBR cables for data center application, the pressure exerted due to coating of water swellable material on fibers increases considerably. Thus, it significantly contributes to micro bending losses.

US 1 1280977B2 discloses fiber-optic cable having optical fibers that are arranged as a rollable ribbon and water-swellable material that is applied directly to the rollable ribbon, thereby eliminating the need to incorporate conventional water-blocking yarns, tapes, or other such similar materials. The patent further discloses application of water-swellable coating over rollable ribbons and discloses the problem of pressure exerted when water swellable material absorbs water. However, none of the arts appears to address the problem of micro bending losses that results from excessive pressure build up due to absorption of water by the water swellable material.

Thus, there remains an unmet need for a solution which meets the water blocking requirements, while at the same time do not increase the overall diameter of the cable and/or increase micro bending losses.

### SUMMARY OF THE INVENTION

This summary is not intended to identify essential features of the claimed subject matter nor is it intended for use in determining or limiting the scope of the claimed subject matter.

In an aspect of the present invention, there is provided an optical fiber ribbon comprising a plurality of optical fibers, wherein at least a pair of adj acent optical fibers of the plurality of fibers are bonded to each other by a matrix material, and wherein at least a region of the optical fiber ribbon is selectively coated with at least a superabsorbent material.

In another aspect of the present invention, the plurality of optical fibers are longitudinally arranged parallel to each other.

In another aspect of the present invention, at least a pair of adjacent optical fibers are continuously bonded.

In another aspect of the present invention, at least a pair of adjacent optical fibers are intermittently bonded.

In another aspect of the present invention, said optical fiber ribbon is a rollable ribbon.

In another aspect of the present invention, at least a pair of adjacent optical fibers are intermittently bonded, wherein the pair of adjacent optical fibers comprise at least a bonded region and at least an unbonded region.

In another aspect of the present invention, a superabsorbent material is coated on at least a part of at least an unbonded region of intermittently bonded optical fibers.

In another aspect of the present invention, a superabsorbent material is coated on at least a part of at least a bonded region of intermittently bonded optical fibers.

In another aspect of the present invention, a superabsorbent material is coated on at least a part of at least a bonded region of intermittently bonded optical fibers and at least a part of at least an unbonded region of intermittently bonded optical fibers.

In another aspect of the present invention, the superabsorbent material is coated on at least a part of at least a pair of continuously bonded adjacent optical fibers.

In another aspect of the present invention, the superabsorbent material is an acrylate polymer.

In another aspect of the present invention, the superabsorbent material comprises at least a colored dye.

In yet another aspect of the present invention, there is provided a tube comprising a plurality of optical fiber ribbons, said ribbons comprising a plurality of optical fibers, wherein at least a pair of adjacent optical fibers of the plurality of fibers are bonded to each other by a matrix material, and wherein at least a region of the optical fiber ribbon is selectively coated with at least a superabsorbent material.

In another aspect of the present invention, there is provided an optical fiber cable comprising a plurality of bundles, said bundles comprising a plurality of optical fibers, wherein at least a pair of adjacent optical fibers of the plurality of fibers are bonded to each other by a matrix material, and wherein at least a region of the optical fiber ribbon is selectively coated with at least a superabsorbent material.

### BRIEF DESCRIPTION OF THE ACCOMPANYING DRAWINGS

The following drawings form part of the present specification and are included to further illustrate aspects of the present invention. The invention may be better understood by reference to the drawings in combination with the detailed description of the specific embodiments presented herein.
Figure 1 depicts an intermittently bonded optical fiber ribbon, in accordance with an embodiment of the present invention.
Figure 2 depicts an intermittently bonded optical fiber ribbon with superabsorbent material coating on alternate fibers of a plurality of optical fibers, in accordance with an embodiment of the present invention.
Figure 3 depicts an intermittently bonded optical fiber ribbon with superabsorbent material coating on the peripheral optical fibers and central pair of optical fibers, in accordance with an embodiment of the present invention.
Figure 4 depicts an intermittently bonded optical fiber ribbon with selective coating of superabsorbent material on a part of fiber of the plurality of fibers in length direction, in accordance with an embodiment of the present invention.
Figure 5 depicts an intermittently bonded optical fiber ribbon with superabsorbent material coating on matrix material used for bonding adjacent optical fibers of a plurality of optical fibers, in accordance with an embodiment of the present invention.
Figure 6 shows a cross-section representation of a tube comprising a plurality of optical fiber ribbons, in accordance with an embodiment of the present invention.
Figure 7 shows a cross-section representation of a cable comprising a plurality of tubes, in accordance with an embodiment of the present invention.

### DETAILED DESCRIPTION OF THE INVENTION

Those skilled in the art will be aware that the invention described herein is subject to variations and modifications other than those specifically described. It is to be understood that the invention describe herein includes all such variations and modifications. The invention also includes all such steps, features, and methods referred to or indicated in this specification, individually or collectively, and any and all combinations of any two or more said features.

For convenience, before further description of the present invention, certain terms employed in the specification, examples are collected here. These definitions should be read in light of the remainder of the disclosure and understood as is by a person skilled in the art. Unless otherwise defined, all technical and scientific terms used herein have the same meaning as commonly understood by a person of ordinary skill in the art. The terms used throughout the specification are defined as follows, unless otherwise limited in specific instances.

The present inventions is not to be limited in scope by the specific embodiments described herein, which are intended for the purposes of exemplification only.

The following description includes the preferred best mode of one embodiment of the present invention. It will be clear from this description of the invention that the invention is not limited to these illustrated embodiments but that the invention also includes a variety of modifications and embodiments thereto. Therefore, the present description should be seen as illustrative and not limiting.

In any embodiment described herein, the open-ended terms "comprising," "comprises," and the like (which are synonymous with "including," "having," and "characterized by") may be replaced by the respective partially closed phrases "consisting essentially of," consists essentially of," and the like or the respective closed phrases "consisting of," "consists of, and the like. As used herein, the singular forms "a", "an" and "the" designate both the singular and the plural, unless expressly stated to designate the singular only.

The present invention provides an optical fiber ribbon comprising a plurality of optical fibers, wherein at least a pair of adj acent optical fibers of the plurality of fibers are bonded to each other by a matrix material, and wherein at least a region of the optical fiber ribbon is selectively coated with at least a superabsorbent material.

In an embodiment, a selective coating pattern is repeated across the length of IBR. For example, in case of applying coating to a selected number of fibers of IBR, the same set of fibers will be coated with superabsorbent material. In alternate embodiment, the selective coating pattern varies across the length of IBR, e.g. for a particular length perform coating on one subset, for a subsequent portion of IBR in longitudinal direction another subset is selectively coated.

In an embodiment, selective coating of superabsorbent material is performed in such a way that aggregate quantity of the superabsorbent material coated in a predefined length of IBR is substantially similar for another portion of the same predefined length. This will ensure that an optical fiber cable enclosing the selectively coated IBRs, in accordance with an embodiment of the present invention, has uniform stress distribution across the length, when superabsorbent material comes in contact with water or moisture.

In an alternate embodiment, selective coating is performed in such a way that a minimum surface area for a predefined cross section of IBR is coated with superabsorbent material. This minimum surface area can vary based on water penetration requirements of the cable.

In an embodiment, the plurality of the optical fibers of the ribbon are longitudinally arranged parallel to each other. In a preferred embodiment, the ribbon is a rollable ribbon. In an embodiment, the ribbon comprises 4-48 optical fibers. In a preferred embodiment, the ribbon comprises 12 optical fibers. In another embodiment, the ribbon comprises more than 12 fibers, for example up to 48 fibres. In an embodiment, adjacent optical fibers are in contact with each other along the length. In an embodiment, adjacent optical fibers are spaced apart.

In an embodiment, each of adjacent pairs of optical fibers of the plurality of optical fibers are intermittently bonded along their length. In an embodiment, the plurality of optical fibers comprises at least a pair of adjacent optical fibers continuously bonded along its length.

The intermittently bonded pairs of adjacent optical fibers in the longitudinal direction comprise at least a bonded region and at least an unbonded region. In the longitudinal direction of intermittent bonding between two adjacent optical fibers, the bonded regions and unbonded regions alternate. In an embodiment, the length of the bonded regions of two adjacent optical fibers in the longitudinal direction are the same. In an embodiment, the length of the unbonded regions of two adjacent optical fibers in the longitudinal directions are the same. In an embodiment, the length of the bonded regions of two adjacent optical fibers in the longitudinal direction are different. In an embodiment, the length of the unbonded regions of two adjacent optical fibers in the longitudinal direction are different. In an embodiment, the bonded and unbonded regions of two adjacent optical fibers in the longitudinal direction form a repeating pattern. The repeating pattern can be used to identify the IBR. In an embodiment, the length of bonded regions of two adjacent optical fibers in a pattern in the longitudinal direction are the same while the length of the unbonded regions are different. In an embodiment, the length of bonded regions of two adjacent optical fibers in a pattern in the longitudinal direction are different while the length of the unbonded regions are same. In an embodiment, the bonds between adjacent optical fibers of an IBR form a shape or pattern which can be used for purpose of identification of the IBR among other IBRs. In yet another embodiment, at least few bonds of an IBR is suitably colored for purpose of identification of the IBR with other IBRs.

In an embodiment, at least a region of at least a bonded region is coated with a superabsorbent material. In an embodiment, at least a region of at least an unbonded region is coated with a superabsorbent material. In an embodiment, at least a region of at least a bonded region and at least a region of at least an unbonded region is coated with a superabsorbent material. In an embodiment, a superabsorbent material is completely coated on at least a bonded region. In an embodiment, the matrix material used for bonding adjacent optical fibers contains a superabsorbent material. In an embodiment, a superabsorbent material is completely coated on at least an unbonded region.

A selective coating of superabsorbent material on fibers of an IBR can be performed in multiple ways. In an embodiment, selective coating of superabsorbent material is performed on a subset of all fibers in an IBR. In an embodiment, a selective coating of superabsorbent material is performed only on fibers on an edge of an IBR. In another embodiment, a selective coating of superabsorbent material is performed on alternate fibers of an IBR. In yet another embodiment, a selective coating of superabsorbent material is performed on fibers in middle of an IBR. In another embodiment, a selective coating of superabsorbent material is performed on fibers in the middle and at the edge of an IBR. In yet another embodiment, a selective coating of superabsorbent material is performed on any combination of fibers in an IBR. In an embodiment, a selective coating of superabsorbent material is performed on a single surface of an IBR. In an embodiment, a selective coating of superabsorbent material is performed on an upper surface of an IBR. In another embodiment, a selective coating of super absorbent material is performed on a lower surface of an IBR. In yet another embodiment, a selective coating of super absorbent material is performed in any combination of aforementioned embodiments.

In an embodiment, a superabsorbent material is coated on a single surface of the optical fiber ribbon. In an embodiment, a superabsorbent material is coated on both the surfaces of the optical fiber ribbon.

In an embodiment, the superabsorbent material is an acrylate polymer. Acrylate polymer(s) can be, but not limited to sodium acrylate polymer, and Potassium Acrylate/Acrylamide copolymer, or a combination thereof. In an embodiment, the superabsorbent material is in powder form. In powder form, the particle size may vary as per requirement and as known in the art. The particle size is not to be construed as a constraint/ limitation of the invention. In an embodiment, the powder particle size can be in the range of 5-300µm, preferably 5-100µm, and more preferably in the range of 5-60µm. The powder can be applied using known methods such as dusting electro-static deposition method or other similar methods. In an embodiment, the superabsorbent material is in liquid form. In an embodiment, the superabsorbent material is in adhesive form. In an embodiment, the adhesive form can be water-soluble hot melt adhesives containing superabsorbent material. The polymeric superabsorbent materials can absorb and retain extremely large amounts of a liquid relative to its own mass.

In an embodiment, the thickness of the superabsorbent material coating on the surface of the optical fiber ribbon is uniform. In an embodiment, the thickness of the superabsorbent material coating on the surface of the optical fiber ribbon can vary. In an embodiment, the superabsorbent material comprises at least a colored dye. In an embodiment, different ribbons can be coated with superabsorbent material of different color for purpose of identification.

In a preferred embodiment, the superabsorbent material is applied during manufacturing of the optical fiber ribbon, e.g., just after applying the matrix material and prior to Ultraviolet (UV) curing or after curing process. In another embodiment, the superabsorbent material is applied on partially cured optical fiber ribbon followed subsequently by curing. In an embodiment, the superabsorbent material is applied via air-guns placed within a closed chamber that blow super absorbent powder mixed with air over the outer surface of the fibers. Alternatively, the coating of the superabsorbent material is done as part of any subsequent process of cable manufacturing e.g., during bunching or stranding or sheathing.

In an exemplary embodiment, the selectively coated ribbons are enclosed in an optical fiber cable comprising at least a tube, said tube comprising at least an optical fiber ribbon as substantially described herein. In an embodiment, an optical fiber ribbon is provided within a tube. In an embodiment, the tube is a loose tube. In another embodiment, the tube is a tight buffered tube. In yet another embodiment, the tube is a thin micromodule. In still another embodiment, one or more ribbons are bound by at least a binder to form a bundle. In an embodiment, a plurality of optical fiber ribbons or bundles are provided within a tube. In an embodiment, the optical fiber cable comprises a single tube or bundle. In an embodiment, the optical fiber cable comprises a plurality of tubes or bundles. In an embodiment, the tube(s) are substantially of circular cross section. In another embodiment, the tube(s) can have non-circular cross section. In an exemplary embodiment, the optical fiber cable comprises a plurality of bundles, whereby the bundles can have non circular cross section. In a preferred embodiment, the plurality of bundles can take a shape based on the empty space within an outer jacket enclosing the plurality of bundles, thus packing more number of fibers. The material of the tube is generally known to a person skilled in the art and not a limiting feature or object of the present invention. The one or more tubes or bundles are enclosed by the outer jacket. The material of the outer jacket is generally known to a person skilled in the art and not a limiting feature or object of the present invention. In an embodiment, the outer jacket can be polyethylene. In an embodiment, the outer jacket can be thermoplastic polyurethane. In an embodiment, the outer jacket can be Polyvinyl chloride (PVC). In an embodiment, the outer jacket can be Low smoke zero halogen (LSZH) polyolefin. In an embodiment, the outer jacket can be fluoropolymer.

In an embodiment, a subset of IBRs within the bundle or the tube (in case of multiple bundles or tubes within the optical fiber cable) is selected and coated with superabsorbent material using the above described combination.

The optical fiber cable can further comprise at least a strength member. In an embodiment, the strength member is Fiber-reinforced plastic (FRP) rod. In an embodiment, the strength member is Aramid Reinforced Plastic (ARP) rod. In an embodiment, the strength member is at least a metallic wire. In an embodiment, at least a strength member is embedded in the outer jacket. In an embodiment, at least a strength member is located between the tube and outer jacket. In an embodiment, at least a strength member is located centrally along with longitudinal axis of the cable. The cable may optionally additionally comprise one or more of water swellable yarns, tapes, and the like for providing additional water blocking capabilities. The cable may also optionally comprise an armor layer.

### EXAMPLES

The disclosure will now be illustrated with working examples, which are intended to illustrate the working of the invention and not intended to be taken restrictively to imply any limitations on the scope of the present invention. Unless otherwise defined, all technical and scientific terms used herein have the same meaning as commonly understood to one of ordinary skill in the art and to which this disclosure belongs.

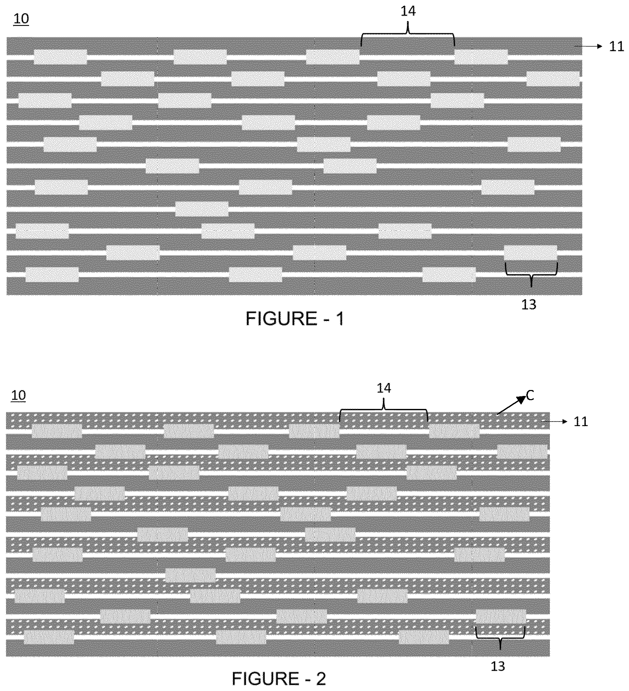

Figure 1 shows a representation of an intermittently bonded optical fiber ribbon (10) comprising a plurality of fibers (11). Adjacent fibers of the plurality of fibers are bonded by a matrix material. A portion of the fiber in length direction which is bonded to an adjacent fiber is referred to as a bonded region (13), and the remaining portion is referred as unbonded region (14) The length of the bonded region (*l*) can vary. Further, the length of the unbonded region (*l*') can vary.

It is to be noted that while the adjacent optical fibers (11) of the ribbon (10) of Fig. 1-5 are shown to be separated by a gap for purpose of illustration, however, this is not a limiting feature, and that adjacent fibers (11) can be arranged in optical fiber ribbon without any gap.

Figure 2 shows a representation of an intermittently bonded optical fiber ribbon (10) comprising selective superabsorbent material coating (C) on alternate fibers of a plurality of optical fibers (11).

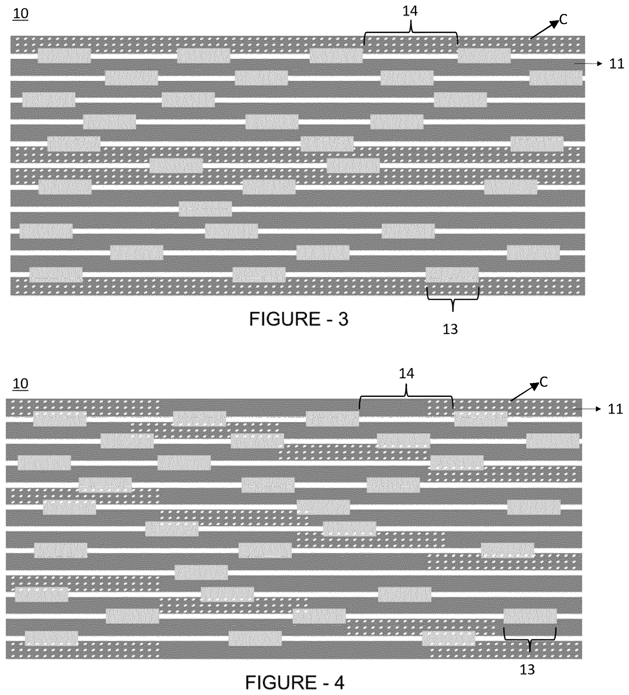

Figure 3 shows a representation of an intermittently bonded optical fiber ribbon (10) comprising superabsorbent material coating (C) on unbonded regions (14) of the two peripheral optical fibers (11) and the pair of central optical fibers (11).

Figure 4 shows a representation of an intermittently bonded optical fiber ribbon (10) comprising selective superabsorbent material coating (C) in length direction on a plurality of optical fibers (11).

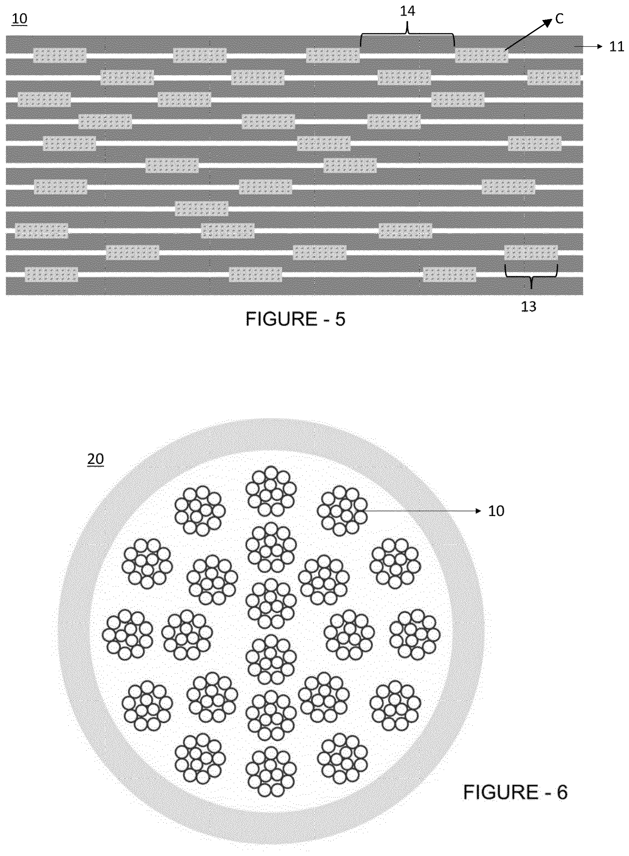

Figure 5 shows a representation of an intermittently bonded optical fiber ribbon (10) comprising superabsorbent material coating (C) on matrix material used for bonding adjacent optical fibers (11). In an embodiment, the superabsorbent material can be mixed in matrix material itself. In another embodiment, superabsorbent material can be applied after applying matrix material as a subsequent process.

Figure 6 shows a cross section representation of a tube (20) comprising a plurality of optical fiber ribbons (10).

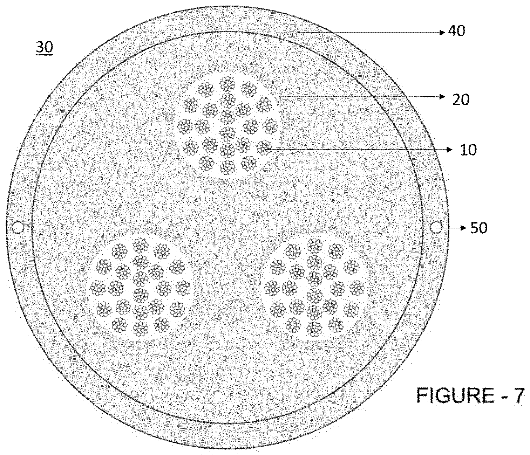

Figure 7 shows a cross-section representation of an optical fiber cable (30) comprising a plurality of tubes (20) encapsulated by an outer jacket (40). The outer jacket (40) may optionally comprise at least a strength member (50). The optical fiber cable (30) may also optionally comprise at least a central strength member (not shown). The optical fiber cable (30) may further optionally comprise water swellable yarn (not shown) placed within the tube(s) or between the plurality of tubes for providing additional water blocking capability. Each tube of plurality of tubes (20) comprises a plurality of optical fiber ribbons (10). It is to be understood that tubes (20) are not an essential feature of the optical fiber cable (30). The plurality of optical fiber ribbons (10) may be comprised within the optical fiber cable (30) without being restricted by tube (20).

It is to be understood that these examples are non-limiting, and other patterns of selective coating are contemplated to be part and parcel of the present invention. The examples are only to show certain implementations of the selective coating of superabsorbent material on the optical fiber ribbon so as to achieve the objectives of the present invention.

### ADVANTAGES OF THE PRESENT INVENTION

The optical fiber cable of the present invention is compact and has reduced diameter. The optical fiber cable of the present invention has better water blocking capability. The optical fiber cable of the present invention has higher optical fiber density. The optical fiber cable has lower material cost. The optical fibers enclosed within the optical fiber cable has reduced micro bending losses. The optical fiber cable of the present invention has reduced complexity in manufacturing.

## Claims

1. An optical fiber ribbon (10) comprising a plurality of optical fibers (11), wherein at least a pair of adj acent optical fibers of the plurality of fibers are bonded to each other by a matrix material, and wherein at least a region of the optical fiber ribbon is selectively coated with at least a superabsorbent material (C).

2. The optical fiber ribbon (10) as claimed in claim 1, wherein at least a pair of adjacent optical fibers are continuously bonded.

3. The optical fiber ribbon (10) as claimed in claim 1, wherein at least a pair of adjacent optical fibers are intermittently bonded, wherein the pair of adjacent optical fibers comprise at least a bonded region (13) and at least an unbonded region (14).

4. The optical fiber ribbon (10) as claimed in claim 3, wherein the superabsorbent material (C) is coated on at least a part of at least an unbonded region (14).

5. The optical fiber ribbon (10) as claimed in claim 3, wherein the superabsorbent material (C) is coated on at least a part of at least a bonded region (13).

6. The optical fiber ribbon (10) as claimed in claims 3-5, wherein the superabsorbent material (C) is coated on at least a part of at least a bonded region (13) and at least a part of at least an unbonded region (14).

7. The optical fiber ribbon (10) as claimed in claim 1, wherein said optical fiber ribbon (10) is a rollable ribbon.

8. The optical fiber ribbon (10) as claimed in claim 1, wherein the superabsorbent material is acrylate polymer.

9. The optical fiber ribbon (10) as claimed in claim 1, wherein the superabsorbent material comprises at least a colored dye.

10. The optical fiber ribbon (10) as claimed in claim 1, wherein the superabsorbent material is applied over the matrix material.

11. An optical fiber cable (30) comprising at least an optical fiber ribbon (10) as claimed in claim 1.
